# EUROPEAN PATENT APPLICATION

(11) **EP 1 317 159 A1**
(43) Date of publication of application: **04.06.2003**
(21) Application number: 01403081.1
(22) Date of filing: 30.11.2001
(51) Int. Cl.: H04Q 7/38

(54) **Authentication, authorisation and accounting for a roaming user terminal**

(71) Applicant: MOTOROLA, INC., Schaumburg Illinois 60196 (US)
(72) Inventor: Mokhtar, Ahmed, 35700 Rennes (FR); Olivereau, Alexis, Motorola Centre de Recherche, l'Orme au Merisier, 91190 Gif-sur-Yvette (FR)
(74) Representative: Wharmby, Martin Angus

(57) **Abstract**

A method of Authentication, Authorisation and Accounting ('AAA') for services performed when a user terminal (1) registered at a home AAA server (3) in its home domain (2) is visiting another AAA domain (4) ('roaming'). An AAA message element (14) is sent from the user terminal (1) to an AAA server (6) in the visited AAA domain (4) comprising a user identification code (15) and a codification (16) combining the user identification code (15) with a common time-varying code element (10). The common code element is initialised by the home AAA server (3) and is available at the user terminal (1) and at the visited AAA server (6). The visited AAA server combines the user identification code (15) with the common time-varying code element (10) and compares the combination result with the codification (16) received from the user terminal to verify the AAA message element.

## Description

### Field of the invention

This invention relates to Authentication, Authorisation and Accounting ('AAA') functions for services performed over one or more networks including at least two different AAA domains and especially, but not exclusively, for services performed over a wireless communication system that enables roaming of mobile terminals.

### Background of the invention

Internet and wireless communication services require Authentication of the user, Authorisation for the specific services or quality of service that the user requests and Accounting for his usage ('AAA' functions).

The first generation of cellular telephone systems relied on analogue frequency modulation for speech transmission, and several standards have been developed, such as NMT450, NMT900, AMPS, and ETACS. The second generation of cellular systems is based on three different standards: in Europe and some countries in Asia and Australia-Global System For Mobile Communications (GSM), in north America--American Digital Cellular (ADC) and in Japan--Pacific Digital Cellular (PDC). These second generation systems all employ digital transmission for voice and data, including some digital services such as facsimile transmission and short messages. Most user terminals for 1^{st} and 2^{nd} generation systems are simple telephone terminals operating with a single telephone system and with limited data processing capability, such as personal data assistants ('PDA's - diary, reminder, notebook) and simple games.

Communication systems are now being prepared according to a third generation of standards. Among 3^{rd} generation cellular standards are the UMTS 3GPP (3^{rd} generation Partnership Project) and 3GPP2 standards, of the European Telecommunications Institute ('ETSI') and the International Mobile Telecommunications-2000 ('IMT-2000') standards. The 3^{rd} generation systems utilise communication protocols that bear a resemblance to Internet protocols and include AAA functions.

The memorandum published by the Internet Engineering Task Force organisation N° RFC2904 dated August 2000 entitled "AAA Authorization framework" presents the basic conceptual entities that may be participants in an authorization:
1. A User who wants access to a service or resource,
2. A User Home Organization that has an agreement with the user and checks whether the user is allowed to obtain the requested service or resource. This entity may carry information required to authorize the User, which might not be known to the Service Provider (such as a credit limit),
3. A Service Provider's AAA Server, which authorizes a service based on an agreement with the User Home Organization without specific knowledge about the individual User. This agreement may contain elements that are not relevant to an individual user (e.g., the total agreed bandwidth between the User Home Organization and the Service Provider), and
4. A Service Provider's Service Equipment, which provides the service itself.

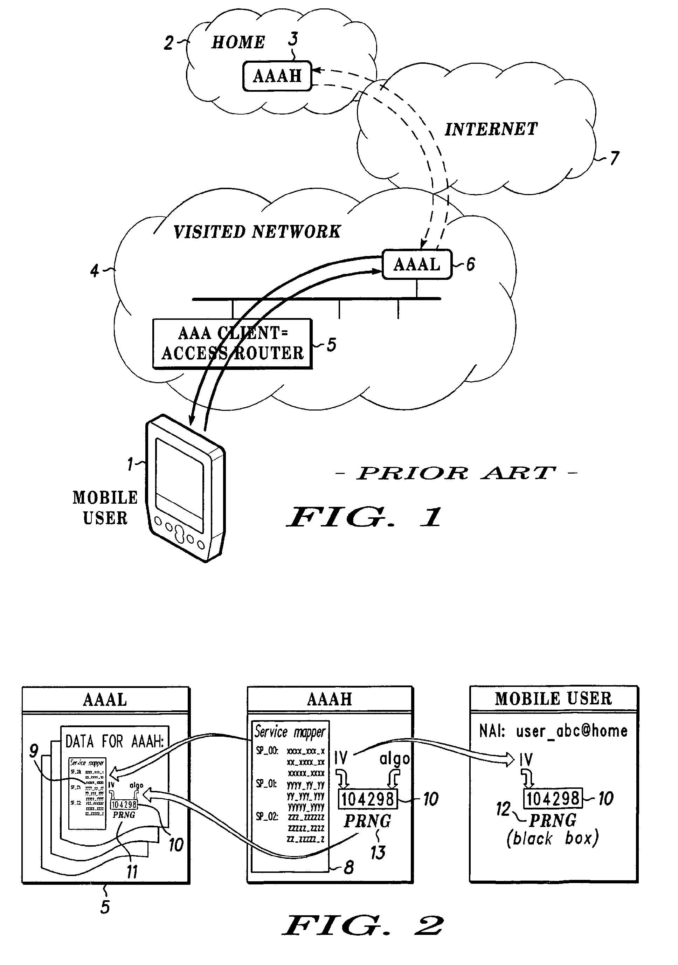

The existing Internet protocols provide for AAA functions in the case of wired connections but they are not well suited to the case of roaming mobile telephone users. Figure 1 of the accompanying drawings shows the case of a mobile user 1 whose user home organisation includes a service provider and which may be directly accessed through a home network 2 that comprises an AAA server 3. The mobile terminal 1 is shown roaming, that is to say communicating through an AAA client 5 (for example an access router) in a visited network 4 that has an AAA server 6.

It is known to perform AAA functions according to schemes in which both Authentication and Authorisation require two-way communication between the home AAA server 3 and the visited AAA server 6:
- The mobile user 1 provides its credentials to the AAA client 5,
- The AAA client 5 forwards the credentials to the local AAA server 6 (AAAL, visited network AAA authority) for authentication,
- The AAAL 6 recognizes that it is unable to authenticate that user since it does not belong to the domain that the AAAL 6 serves; the AAAL 6 then forwards the credentials to the home network AAA server 3 (AAAH) over the Internet 7 for authentication,
- The AAAH 3 authenticates the credentials and sends its validation to the AAAL 6,
- The AAAL 6 forwards the authentication validation to the AAA client 5, and
- The mobile user 1 is granted access to the visited network 4.
This messaging between the mobile user 1, the local AAA server 6 and its home AAA authority 3 does not happen only in the initial authentication request when a mobile user 1 roams into a foreign network 4. The AAAH 3 is also involved:
- For subsequent Authorization requests; the AAAL 6 must make sure that it is correctly paid for the service requested by the mobile user 1 and involves the AAAH 3, which knows the traffic profile subscribed by the user 1,
- For any Authorization request for a specific service, and
- For any Authentication request that the AAAL 6 may send to the mobile user 1; these supplementary authentication requests are likely to occur either periodically or when the user requests access to a particular service.

The three distinct mechanisms described for Authorization (Agent Sequence, Push Sequence, Pull Sequence) in the above-mentioned memorandum N° RFC2904 all involve two-way communication with the AAAH 3.

The memorandum submitted to the Internet Engineering Task Force organisation in July 2001 entitled "AAA Local Security Association (LSA): The Temporary Shared Key (TSK)" describes a mechanism to set up a Local Security Association (LSA) between a user and the visited network when the user is roaming. However this proposal only gives the AAAH the ability to delegate its authentication capability after it has already first authenticated the mobile user.

It will be appreciated that long delays may occur in the case of a roaming mobile user for AAA authentication and/or authorization involving two-way communication (round-trip exchanges) with the home AAA server, especially when the visited network is geographically far from the home network, and the round-trip exchanges of AAA messages may represent a substantial overhead (unproductive consumption of communication capacity) that is particularly unsatisfactory in the case of wireless communications.

### Summary of the invention

The present invention provides a method of and apparatus for Authentication, Authorisation and Accounting ('AAA') for services performed over one or more networks as described in the accompanying claims.

### Brief description of the drawings

Figure 1 is a schematic diagram of a prior art AAA system that is not in accordance with the present invention,
Figure 2 is a chart indicating the initialisation of pseudo-random number generators in an AAA system in accordance with one embodiment of the invention,
Figure 3 is a diagram showing the structure of an authentication and authorisation request message in the AAA system in accordance with this embodiment of the invention, and
Figure 4 is a chart showing the process of authentication and authorisation in the AAA system in accordance with this embodiment of the invention.

### Detailed description of the preferred embodiments

The AAA system in accordance with the present embodiment of the invention illustrated in Figures 2 to 4 of the accompanying drawings is applicable to a network architecture of the kind illustrated in Figure 1. This AAA system is particularly suitable for the case where the networks 2 and 4 are UMTS or other wireless communication networks forming two different domains, being managed by two different operators, who are also service providers. However, this embodiment of the invention is also applicable more generally to networks of other kinds. Figure 1 illustrates an operational situation in which the network 2 is the home domain for the mobile user terminal 1, which is visiting the network 4; it will be appreciated that preferably the networks 2 and 4 are similarly equipped to function as home domains for the mobile terminals that are registered with them and as visited domains for other user terminals that are in direct communication with them ('visiting').

The AAA system of this embodiment of the invention enables the visited domain 4 to authenticate and authorize each request message from a visiting mobile user terminal 1 without a specific exchange of messages with the home domain 2, both at the first authentication/authorization request (the user terminal has just roamed into the foreign network) as well as in any subsequent authentication/authorization request.

Each domain holds the registration and accounting information on the user terminals that are registered with it and, in addition, a security association is made between each user terminal and its home domain. A security association is also made between the AAA servers 3 and 6 of the domains 2 and 4.

It is possible for this embodiment of the invention to be used only for authentication, in which case no exchange of service profile data is made. However the preferred embodiment of the invention, illustrated in Figure 2, is used both for authentication and authorisation. As a preliminary, the operators of the AAA servers 3 and 6 conclude an agreement for exchange of service profile definitions. A list of the associated (AAAL) AAA domains with which it has an agreement for them to act as visited domains and, conversely, a list of the associated (AAAH) AAA domains with which it has an agreement to act for them as visited domain is registered and stored in each AAA server 3 and 6.

Since the services and service level definitions will not be in identical terms in general, the AAA servers 3 and 6 exchange a coding of the different service profiles they provide: a map 8 of the correspondence between the *Service Profile Identifier* (SP-ID) codes and the actual, quantifiable services and service levels available from the associated (home AAAH) network 2 is sent by the home AAA server 3 and the data 9 is stored in each of the other (local AAAL) AAA servers 6 for use with visiting user terminals 1.

A time-varying code element 10 for use in common by the visited server 6 and the user terminals 1 when visiting the domain 4 is initialised by the home domain AAA server 3 and is available at the associated (visited) AAA server 6 and the user terminals 1. The common code element 10 preferably, as shown, comprises a time-varying pseudo-random number generated substantially synchronously by a first generator ('PRNG') 11 at the visited AAA server and a second generator at the mobile terminal 12. The home server also preferably includes a PRNG 13 for use in verifying return messages from the associated (AAAL) AAA server 6. The generators 11, 12 and 13 are initialised and periodically re-initialised by encrypted data transmitted by the home AAA server.

In this preferred embodiment, each of the domains 2 and 4 comprises a plurality of such first pseudo-random number generators 11, one for each of the associated other (AAAH) domains, the generators 11 and 12 being initialised and periodically re-initialised by respective encrypted synchronisation data transmitted by the respective associated (home) AAA servers, which simultaneously initialise and periodically re-initialise their own PRNGs 13.

In the preferred embodiment of the invention, the PRNG 12 of the user terminal is encapsulated as hardware in an integrated circuit, so that the programme for production of the code 10 and the codes future values are inaccessible to the user. The PRNG 11 of the AAA server 6 is a software programme, however, in this embodiment of the invention.

In one embodiment of the invention, the code element 10 is produced by the BBD algorithm described in L. Blum, M. Blum and M. Shub, "A Simple Unpredictable Pseudo-Random Number Generator", SIAM Journal on Computing, v.15, n.2, 1986, pp. 364-383. In performance of this algorithm:

"First find two large prime numbers, p and q, which are congruent to 3 modulo 4. The product of those numbers, n, is a Blum integer. Choose another random integer, x, which is relatively prime to n. Compute x0 = x^2 mod n. That is the seed for the generator. Now you can start computing bits. The ith pseudo-random bit is the last significant bit of xi, where xi = (xi-1)^2 mod n".

In another embodiment of the invention, the code element 10 is produced by the RSA algorithm described in W. Alexi, B.-Z. Chor, O. Goldreich, and C.P. Schnorr, "RSA and Rabin Functions: Certain Parts are as Hard as the Whole", Proceedings of the 25th IEEE Symposium on the Foundations of Computer Science, 1984, pp. 449-457. In performance of this algorithm:

"The initial parameters are a modulus N which is the product of two large primes p and q, an integer e which is relatively prime to (p-1)(q-1), and a random seed x0, where x0 is less than N. xi+1 = xi^e mod N. The output of the generator is the least significant bit of xi."

The encrypted synchronisation data transmitted by each home AAA server 3 comprises an initialisation vector including the values of p, q & x/x0. The PRNGs 11, 12 and 13 then compute xi, updating i at pre-defined time periods, so that they are always synchronised. In this embodiment of the invention, p & q subsequently remain fixed, so that only x/x0 needs to be distributed as a re-initialisation vector.

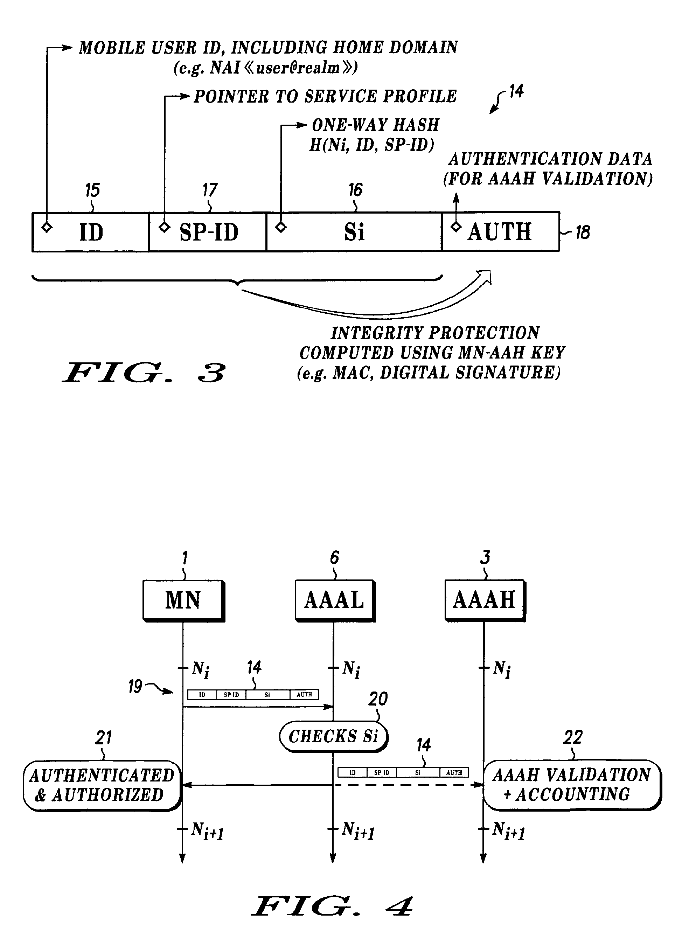

When a user terminal 1 is in its home domain, it is identified by its home AAA server 3, which processes the authentication and/or authentication directly. However, when the user terminal is visiting an associated domain, each time it is required to give a proof of its identity, either to be authenticated or authorized, the user terminal 1 generates an AAA message element 14, as shown in Figure 3 and sends it to the visited (AAAL) AAA server 6.

The AAA message element 14 that the user terminal generates comprises a user identification code 15 including an indication of the user's home domain, preferably the Network Access Identifier in the form of 'user@realm', and a codification 16 combining the user identification code 15 with the common time-varying code element 10 produced by the user terminal's PRNG 12. The visited AAA server 6 combines the user identification code 15 with the common time-varying code element 10 produced by the PRNG 11 of the visited AAA server 6 and compares the combination result with the codification 16 received from the user terminal to verify the AAA message element.

This is sufficient for simple authentication of the user terminal. However, in order to enable authorisation of service and service level requests, in this preferred embodiment of the invention, the AAA message element 14 also comprises a selected service profile identification code (SP-ID) 17 for one of the service profiles selected by the user terminal 1, and the codifications 16 produced by the user terminal 1 and by the visited AAA server 6 combine the selected service profile identification code 17 as well as the user identification code 15 with the common code element 10. The visited (AAAL) server 6 can therefore authenticate the visiting user terminal 1 and identify the requested service profile from the stored local data 9.

From the ID part of this authentication message, the visited AAA server (AAAL) 6 is able to recover the home domain of the mobile user and it recognises that the user terminal 1 is not one of its home user terminals. From the SP-ID part, it recovers the service level that it must provide to that user.

It consults then the pseudo-random number 10 it has at this time (Nᵢ) and computes the expected value S'ᵢ of the codification 16. S'ᵢ is then compared to the value Sᵢ of the codification 16 sent by the user terminal 1 in the AAA message element 14 that is specific to this home domain. If both numbers are identical, the mobile user is authenticated and is granted access to services of the visited network, corresponding to the SP-ID it requests.

Impersonation of a user terminal is detected. If another user terminal (xxx) intercepts an AAA message from the original user terminal (aaa) and substitutes its user ID for the original user ID 15, it cannot itself perform the coding combination 16 as it does not know the value of the code element 10. Accordingly, the expected value S'ₗ computed by the AAAL server 6 will no longer correspond to the value Sᵢ of the codification 16 received.

Similarly, any attempt to obtain a better service than the user terminal is itself entitled to is detected. The user cannot modify the service profile stored in his terminal. If it intercepts one of its own AAA messages and substitutes another requested SP-ID for the original requested SP-ID, it cannot itself perform the coding combination 16 as it does not know the value of the code element 10. Once again the expected value S'ₗ computed by the AAAL server 6 will no longer correspond to the value Sᵢ of the codification 16 received.

In this preferred embodiment of the invention, the codification 16 is a one-way hash function that is in conformity with US Federal Information Processing Standard 180-1. Suitable hash functions that are used in the preferred embodiments of the invention are described in Request for Comments publications of the Internet Engineering Task Force RFC1321 and RFC3174.

It is not necessary for the visited AAA domain 4 to communicate with the home domain 2 of the visiting user terminal 1 before providing the services requested to the user terminal. Accordingly no delay is introduced for the authentication and/or authorisation process from this cause. Also, while it remains necessary for accounting purposes to forward the AAA message 14 to the home AAA server (AAAH) 3 along with information as to the services provided, the messages sent to the home AAA server 3 may be sent subsequently and grouped so as to reduce the overhead on the communication capacity.

To enable authentication of the messages by the home AAA server 3, and its integrity even relative to the visited server 6, the AAA message element also includes an authentication data element 18 computed using the private key shared by the user terminal 1 and its home AAA server 3. In a preferred embodiment of the invention, the integrity protection is in the form of a Message Authentication Code signature, that is to say basically a one-way hash function applied to both the message elements 15, 16 and 17 and the key, so that only the owner of the key (the home AAA server 3) can verify the integrity of the message. In another embodiment of the invention, the integrity protection is in the form of asymmetric cryptography, which uses a digital signature that also offer non-repudiation service.

Figure 4 shows the complete message cycle. The AAA message element 14 is transmitted from the user terminal (mobile node) 1 to the visited AAA server (AAAL) 6 at 19. The visited AAA server 6 checks the codification Sᵢ 16 at 20 and sends an authentication and authorisation response at 21. Subsequently, the AAA message 14 and usage information is sent to the home AAA server (AAAH) 3 at 22 for accounting and validation.

## Claims

1. A method of Authentication, Authorisation and Accounting ('AAA') for services performed over one or more networks including a home AAA domain (2) for each user terminal (1) when the user terminal is visiting another AAA domain (4), the user terminals (1) being registered at a home AAA server (3) in their respective home domains (2), the method comprising transmitting an AAA message element from said user terminal (1) to an AAA server (6) in the visited AAA domain (4), said AAA message element comprising a user identification code (15) including an indication of the user's home domain (2),
**characterised in that** said AAA message element (14) also comprises a codification (16) combining said user identification code (15) with a common time-varying code element (10), said common code element being initialised by said home AAA server (3) and being available at said user terminal (1) and at said visited AAA server (6), and said visited AAA server combines said user identification code (15) with said common time-varying code element (10) and compares the combination result with the codification (16) received from the user terminal to verify the AAA message element.

2. A method as claimed in claim 1, wherein said other AAA domains (4) register definitions (9) of services and service levels provided by said home domain identified by service profile identifier codes, said AAA message element comprises a selected service profile identification code (17) for one of said service profiles selected by said user terminal, and said codification (16) combines said user identification code (15) and also said selected service profile identification code (17) with said common code element (10).

3. A method as claimed in claim 2, wherein an Accounting data message is sent (22) from said visited AAA server (6) to said home AAA server (3), said Accounting data message including said user identification code (15) and said selected service profile identification code (17).

4. A method as claimed in claim 3, wherein said AAA message element also includes an authentication data element (18) comprises a digital signature recognised by said home AAA server (3).

5. A method as claimed in any preceding claim, wherein said common code element (10) comprises a time-varying pseudo-random number generated substantially synchronously by a first generator (11) at said visited AAA server (6) and a second generator (12) at said user terminal (1), said first and second generators (11, 12) being initialised and periodically re-initialised by encrypted data transmitted by said home AAA server (3).

6. A method as claimed in claim 5, wherein each of said domains (2, 4) comprises a plurality of said first pseudo-random number generators (11) that are initialised and periodically re-initialised by encrypted data transmitted by respective home AAA servers (3).

7. A method as claimed in any preceding claim, wherein said codification (16) comprises performing a hash function on said identification codes (15, 17) and said common code element (10).

8. A method as claimed in claim 7, wherein said hash function is a one-way hash function.

9. A method as claimed in claim 8, wherein said hash function is compliant with US Federal Information Processing Standard 180-1.

10. A method as claimed in any preceding claim, wherein said networks include wireless communication networks and said services include wireless communication services.

11. Authentication, Authorisation and Accounting ('AAA') apparatus for services performed over one or more networks that include a home AAA domain (2) for each user terminal (1) when the user terminal is visiting another AAA domain (4), the apparatus including respective AAA message generation means in said user terminals (1) for generating an AAA message element comprising a user identification code (15) including an indication of the user's home domain (2), and respective AAA servers (3, 6) in said domains (2, 4) for registering home user terminals and for receiving said AAA message element from a visiting user terminal,
**characterised in that** the AAA message element (14) produced by said AAA message generation means is arranged also to comprise a codification (16) combining said user identification code (15) with a common time-varying code element (10), said common code element being initialised by the home AAA server (3) and being available at said user terminal (1) and at the visited AAA server (6), and said visited AAA server being arranged to combine said user identification code (15) with said common time-varying code element (10) and compare the combination result with the codification (16) received from the user terminal (1) to verify the AAA message element.

12. Apparatus as claimed in claim 11, wherein said AAA domains (4) register definitions (9) of services and service levels provided by others of said domains (2) identified by service profile identifier codes, said terminal units being arranged to include in said AAA message element (14) a selected service profile identification code (17) for a selected one of said service profiles, said codification (16) combining said user identification code (15) and also said selected service profile identification code (17) with said common code element (10).

13. Apparatus as claimed in claim 11 or 12, wherein said AAA servers and said terminal units include respectively first and second generators (11, 12) for generating substantially synchronously said common code element (10), said common code element comprising a time-varying pseudo-random number, each of said AAA servers (2) being arranged to transmit to the AAA servers (6) of other associated domains (4) encrypted data whereby to initialise and periodically to re-initialise said generators.

14. Apparatus as claimed in claim 13, wherein each of said domains (4) comprises a plurality of said first pseudo-random number generators (11) that are initialised and periodically re-initialised by encrypted data transmitted by respective home AAA servers (3).

15. Apparatus as claimed in any of claims 11 to 14, wherein said codification (16) comprises performing a one-way hash function on said identification codes (15, 17) and said common code element (10).

16. A user terminal for Authentication, Authorisation and Accounting ('AAA') apparatus as claimed in any of claims 11 to 15.

17. An AAA server for Authentication, Authorisation and Accounting ('AAA') apparatus as claimed in any of claims 11 to 15.
